# FASCICULE DE BREVET EUROPEEN

(11) **EP 1 468 912 B1**
(45) Date de publication et mention de la délivrance du brevet: **31.08.2005**
(21) Numéro de dépôt: 04290702.2
(22) Date de dépôt: 15.03.2004
(51) Int. Cl.: B64G 1/66, H01Q 15/16

(54) **Structure à géométrie variable pour un appareil monté à bord d'un engin spatial**
Verstellbare Struktur für ein Bordgerät eines Raumfahrzeuges
Variable geometry structure for a device on board of a spacecraft

(30) Priorité: 14.04.2003 FR 0304633
(43) Date de publication de la demande: 20.10.2004
(73) Titulaire: EADS SPACE Transportation SAS, 75116 Paris (FR)
(72) Inventeur: Desagulier, Christian, 78700 Conflans Sainte Honorine (FR)
(74) Mandataire: Bonnetat, Christian

(56) Documents cités:
- US-A- 3 406 404
- US-A- 4 014 617
- US-A- 5 990 851
- US-A1- 2002 190 161

## Description

La présente invention concerne une structure à géométrie variable pour un appareil monté à bord d'un engin spatial.

On sait que de nombreux dispositifs, tels que générateurs solaires, antennes radioélectriques, pare-soleil, etc ... sont constitués par un ensemble d'éléments articulés entre eux pour que ledit ensemble puisse être replié et occuper un encombrement minimal à bord d'un engin spatial, avant et pendant le lancement de celui-ci. Après mise dans l'espace dudit engin, ledit ensemble d'éléments est déployé pour que le dispositif puisse prendre sa configuration opérationnelle.

Pour l'articulation de tels éléments, il est connu d'utiliser des systèmes d'articulation à déploiement automatique, tels que ceux décrits, par exemple, dans les documents US-3 386 128, FR-2 122 087 et FR-2 635 077. Pour leur déploiement automatique, ces systèmes utilisent l'énergie de ressorts bandés en position repliée desdits éléments.

De tels systèmes d'articulation automatiques sont relativement lourds et compliqués et leur déploiement est difficilement contrôlable notamment en ce qui concerne l'instant initial et la vitesse de déploiement.

Par ailleurs, par le document US-3 406 404, on connaît déjà une structure à géométrie variable pour un appareil destiné à être monté à bord d'un engin spatial, ladite structure comportant :
- une base,
- des moyens de traction montés sur ladite base, et
- des liens souples reliés auxdits moyens de traction,
ledit appareil pouvant passer d'un état détendu non fonctionnel à un état sous tension fonctionnel par action desdits moyens de traction sur lesdits liens souples.

Dans cette structure connue, ledit appareil est constitué d'une peau souple, tendue sur des membrures déployables par l'action desdits liens souples, ce qui ne permet pas d'obtenir une grande précision de forme pour ledit appareil dans son état sous tension fonctionnel.

La présente invention a pour objet de remédier aux inconvénients rappelés ci-dessus.

A cette fin, selon l'invention, la structure à géométrie variable du type mentionné ci-dessus est remarquable en ce qu'elle comporte plusieurs éléments rigides reliés de façon lâche entre eux et à ladite base par l'intermédiaire d'une peau souple et en ce que lesdits liens souples sont reliés auxdits éléments rigides de façon que, dans ledit état sous tension fonctionnel, lesdits éléments rigides soient en butée contre ladite base et au contact les uns des autres.

Ainsi, tant que lesdits moyens de traction n'agissent pas sur lesdits liens souples, ladite structure est dans un état détendu ou relâché, qui peut correspondre au stockage. En revanche, lorsque lesdits moyens de traction tirent lesdits liens souples, lesdits éléments rigides sont fermement plaqués contre ladite base par la tension dudit lien souple. L'appareil se trouve alors dans un état sous tension de forme précise correspondant à son état fonctionnel.

Lesdits moyens de traction peuvent être réalisés de différentes façons connues. Cependant, de préférence, ils comportent au moins soit un ressort comprimé, soit une vessie gonflable.

Pour assurer, à l'état sous tension desdits éléments rigides, la rigidité de la liaison entre ces derniers et ladite base, il est avantageux que ceux-ci comportent des surfaces respectives aptes à coopérer les unes avec les autres pour procurer une assise stable auxdits éléments rigides sur ladite base, sous l'action desdits moyens de traction sur lesdits liens.

Selon un premier mode de réalisation de l'invention, lesdits éléments rigides constituent au moins partiellement un organe fonctionnel dudit appareil, ladite peau souple n'exerçant que la fonction de liaison lâche desdits éléments rigides entre eux et avec ladite base.

En variante, ladite peau souple, en plus de sa fonction de liaison lâche desdits éléments rigides entre eux et avec ladite base, peut constituer au moins partiellement un organe fonctionnel dudit appareil, lesdits éléments rigides ne servant que de support au moins partiel à ladite peau souple.

Lesdits éléments rigides peuvent être répartis autour de ladite base et lesdits moyens de traction peuvent être communs aux liens souples de tous lesdits éléments rigides. Dans ce cas, il est avantageux que ladite peau souple présente, à l'état détendu desdits liens souples, la forme au moins approximative d'une soucoupe et que lesdits éléments rigides présentent au moins approximativement la forme de secteurs, convergeant vers ladite base.

A des fins de redondance, pour éviter qu'un élément rigide ne puisse pas prendre son état sous tension par suite de la rupture de son lien souple, on prévoit que chaque élément rigide est relié à ladite base par au moins deux liens souples, chaque lien souple étant commun à au moins deux éléments rigides adjacents.

Les figures du dessin annexé feront bien comprendre comment l'invention peut être réalisée. Sur ces figures, des références identiques désignent des éléments semblables.

La figure 1 est une vue schématique de face, avec arraché partiel et à l'état détendu, d'une structure conforme à la présente invention pour un réflecteur d'antenne.

La figure 2 est une coupe diamétrale selon la ligne II-II de la figure 1.

La figure 3 est une vue schématique de face, sous tension, du réflecteur d'antenne des figures 1 et 2.

La figure 4 est une coupe diamétrale selon la ligne IV-IV de la figure 3.

La figure 5 est une coupe partielle selon la ligne V-V de la figure 3.

La figure 6 est une vue schématique de face, avec arraché partiel et à l'état détendu, d'une variante de réalisation de structure de réflecteur d'antenne conformément à la présente invention.

La figure 7 est une coupe diamétrale selon la ligne VII-VII de la figure 6.

La figure 8 est une vue schématique de face, sous tension, du réflecteur d'antenne des figures 6 et 7.

La figure 9 est une coupe diamétrale selon la ligne IX-IX de la figure 8.

La figure 10 est une coupe partielle selon la ligne X-X de la figure 8.

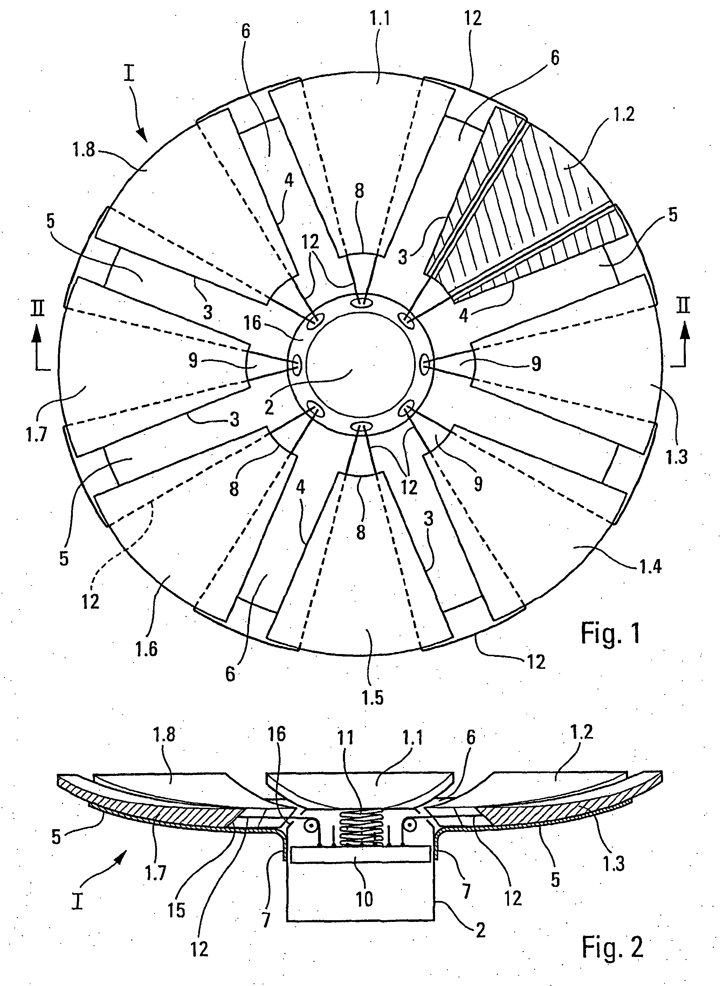

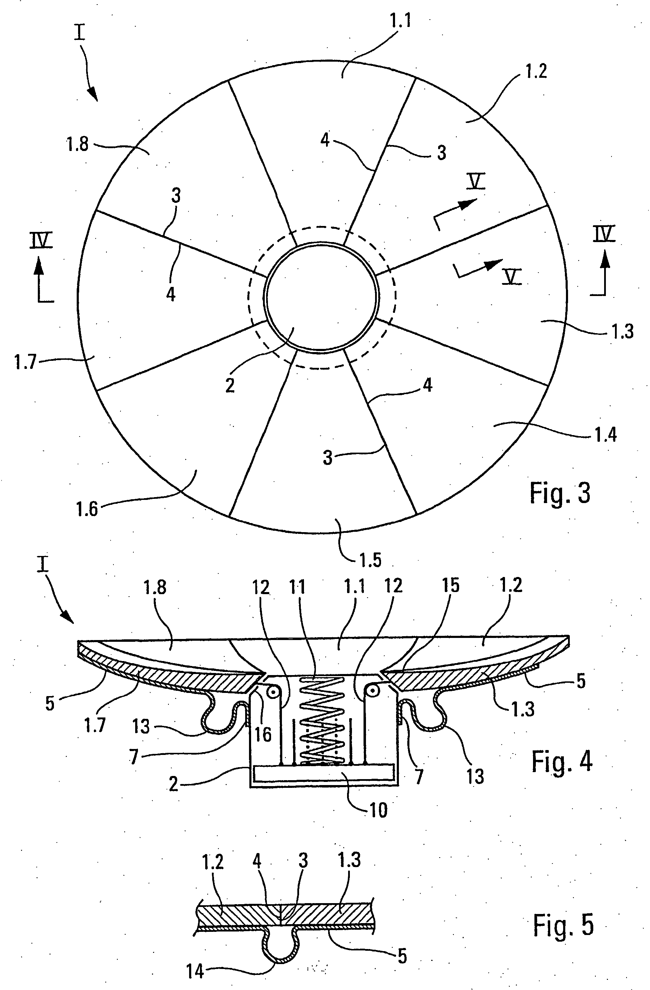

Les figures 1 à 5 représentent, à titre d'exemple de réalisation de la présente invention, un réflecteur d'antenne parabolique I pouvant prendre soit un état détendu non fonctionnel (figures 1 et 2), soit un état sous tension fonctionnel (figures 3, 4 et 5).

Le réflecteur d'antenne I comporte une pluralité d'éléments rigides 1.1 à 1.8, à la forme de secteurs dudit réflecteur, répartis autour d'une base 2 et délimités chacun par des bords latéraux 3 et 4 correspondant à des rayons dudit réflecteur.

Par leur face arrière non fonctionnelle, lesdits éléments 1.1 à 1.8 sont solidarisés d'une peau souple 5, par exemple en forme de soucoupe annulaire. A l'état relâché du réflecteur d'antenne I (figures 1 et 2), les éléments 1.1 à 1.8 sont disposés sur ladite peau souple 5, de façon que les bords latéraux 3 et 4 de deux éléments adjacents soient écartés l'un de l'autre, en laissant subsister entre eux un couloir dégagé 6 de ladite peau 5.

La partie centrale de la peau souple 5 est de plus solidarisée de ladite base 2, à l'emplacement désigné par la référence 7 sur les figures 2 et 4.

Tant que ledit réflecteur I est à l'état relâché, les bords internes 8 des éléments 1.1 à 1.8 sont séparés de la base 2 par un anneau 9, dégagé, de la peau 5.

A l'intérieur de ladite base 2 est disposé un palonnier ou dispositif analogue 10, chargé par un ressort 11. A l'état relâché du réflecteur I, le ressort 11 est maintenu comprimé par un dispositif de blocage non représenté.

Enfin, le palonnier 10 est relié aux éléments rigides 1.1 à 1.8 par des liens souples 12. Dans l'exemple représenté, chaque lien souple 12 relie deux éléments rigides adjacents au palonnier 10. Par exemple, les liens souples 12 traversent lesdits éléments rigides 1.1 à 1.8 longitudinalement et forment une boucle à la périphérie de ceux-ci pour passer d'un élément à l'élément adjacent.

Lorsque l'on désire former ledit réflecteur dans sa configuration fonctionnelle, on élimine le dispositif de blocage du ressort 11 dans son état comprimé. Ce ressort 11 se détend donc en repoussant le palonnier 10 qui, lui-même, trie les liens 12, de sorte que lesdits éléments rigides 1.1 à 1.8, d'une part, sont rapprochés de la base 2 et, d'autre part, se rapprochent mutuellement l'un de l'autre. A la fin du processus, lesdits éléments rigides viennent en butée contre la base 2 et sont au contact les uns des autres, de façon que le bord latéral 3 de l'un soit appliqué contre le bord latéral 4 de l'élément adjacent. Il en résulte qu'un bourrelet 13 (voir la figure 4) de peau souple 5 se forme autour de la base 2, à l'emplacement de l'anneau 9 et que des bourrelets 14 (voir la figure 5) de peau souple 5 se forment entre chaque paire d'éléments 1.1 à 1.8 adjacents, en correspondance avec les couloirs 6.

Pour procurer une assise stable auxdits éléments rigides 1.1 à 1.8 sur ladite base 2, les bords internes 8 desdits éléments et cette dernière comportent des surfaces respectives 15 et 16 aptes à coopérer l'une avec l'autre à cet effet.

Dans le mode de réalisation I des figures 1 à 5, chaque élément rigide 1.1 à 1.8 constitue, par sa face avant opposée à la peau souple 5, une partie fonctionnelle dudit réflecteur I, ladite peau souple 5 n'exerçant qu'une fonction de liaison lâche entre lesdits éléments rigides 1.1 à 1.8 et la base 2.

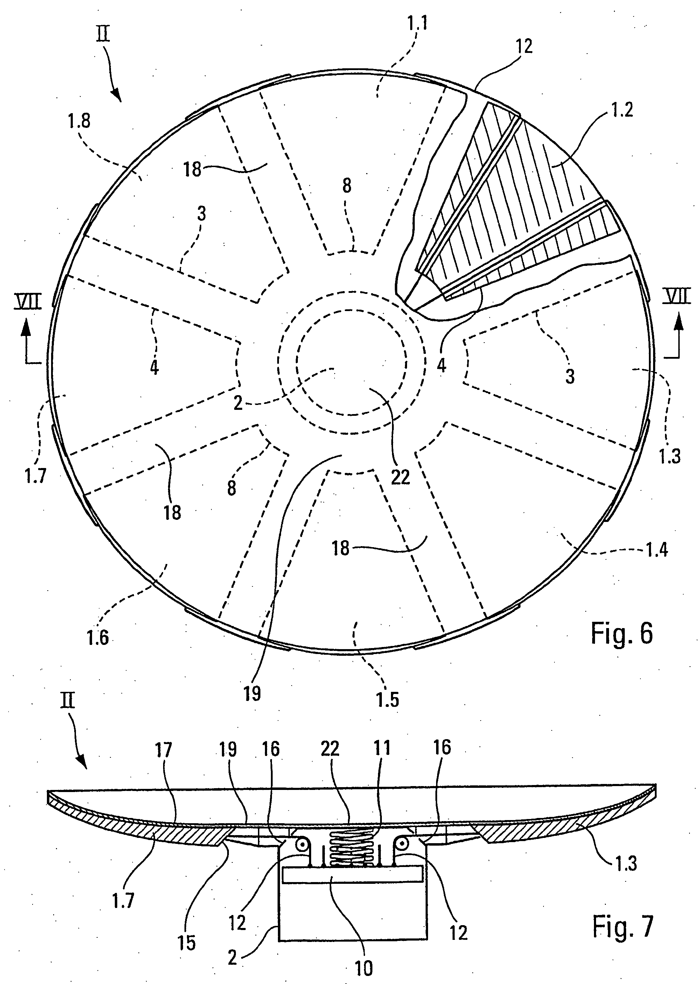

Au contraire, dans le mode de réalisation II des figures 6 à 10, la peau souple non seulement exerce la fonction de liaison lâche mentionnée ci-dessus, mais de plus forme la partie fonctionnelle du réflecteur II, les éléments rigides 1.1 à 1.8 ne servant alors que de support à ladite peau 17.

Dans le réflecteur II, on retrouve tous les éléments 1.1 à 1.8, 2 à 4, 8, 10 à 12, 15 et 16 décrits en regard des figures 1 à 5. Cependant, dans ce réflecteur II, la peau souple 5 disposée sous les éléments rigides 1.1 à 1.8 est supprimée et remplacée par une peau souple 17, en forme de soucoupe, recouvrant la face avant desdits éléments rigides 1.1 à 1.8 et solidarisée de ladite base 2 par sa partie centrale 22. Dans ce cas, ladite peau souple 17 comporte des couloirs 18 (comparables aux couloirs 6) dégagés entre chaque paire adjacente desdits éléments rigides 1.1 à 1.8 et un anneau dégagé 19 (comparable à l'anneau 9) autour de ladite partie centrale 22. Lorsque le ressort 11 est détendu, à la place des couloirs 18 se forment des fentes 20 recouvertes de peau 17 entre les bords adjacents 3 et 4 desdits éléments rigides 1.1 à 1.8, et à la place de l'anneau 19 se forme un bourrelet circulaire 21.

Dans les deux exemples décrits ci-dessus, on a représenté les moyens de traction sous la forme d'un ressort 11. Il va de soi que celui-ci pourrait être remplacé par une vessie gonflable, non représentée.

On remarquera que la structure à géométrie variable conforme à la présente invention peut, après avoir été mise sous tension par lesdits moyens de traction, être ramenée à l'état détendu ou relâché par suppression de l'action desdits moyens de traction.

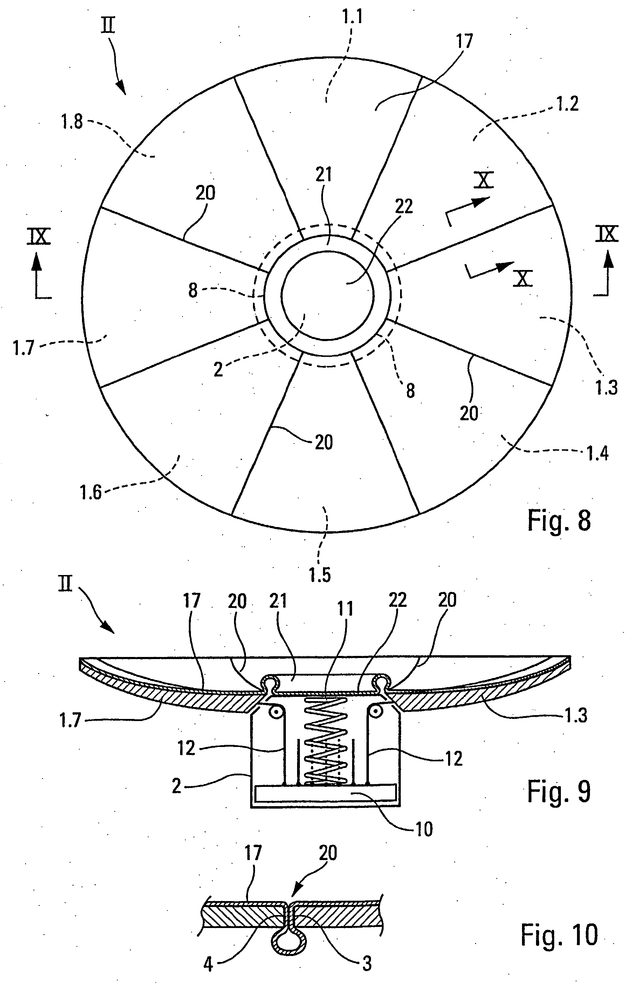

On remarquera de plus que, puisque dans l'exemple de réalisation Il des figures 6 à 10 la peau 17 recouvre lesdits éléments 1.1 à 1.8, ceux-ci peuvent être ajourés. Par ailleurs, le bourrelet 21 (figure 9) peut éventuellement être formé sous lesdits éléments 1.1 à 1.8 au lieu de se trouver du côté de ladite peau 17.

## Revendications

1. Structure à géométrie variable pour un appareil (I, II) destiné à être monté à bord d'un engin spatial, ladite structure comportant :
- une base (2),
- des moyens de traction (11) montés sur ladite base (2), et
- des liens souples (12) reliés auxdits moyens de traction (11),
ledit appareil pouvant passer d'un état détendu non fonctionnel à un état sous tension fonctionnel par action desdits moyens de traction (11) sur lesdits liens souples (12),
**caractérisée en ce qu'**elle comporte plusieurs éléments rigides (1.1 à 1.8) reliés de façon lâche entre eux et à ladite base (2) par l'intermédiaire d'une peau souple (5, 17) et **en ce que** lesdits liens souples (12) sont reliés auxdits éléments rigides (1.1 à 1.8) de façon que, dans ledit état sous tension fonctionnel, lesdits éléments rigides (1.1 à 1.8) soient en butée contre ladite base (2) et au contact les uns des autres.

2. Structure selon la revendication 1,
**caractérisée en ce que** lesdits moyens de traction (11) comportent au moins un ressort comprimé.

3. Structure selon la revendication 1,
**caractérisée en ce que** lesdits moyens de traction (11) comportent au moins une vessie gonflable.

4. Structure selon l'une des revendications 1 à 3,
**caractérisée en ce que** ladite base (2) et lesdits éléments rigides (1.1 à 1.8) comportent des surfaces respectives (15, 16) aptes à coopérer les unes avec les autres pour procurer une assise stable auxdits éléments rigides (1.1 à 1.8) sur ladite base (2), sous l'action desdits moyens de traction (11) sur lesdits liens (12).

5. Structure selon l'une des revendications 1 à 4,
**caractérisée en ce que** lesdits éléments rigides (1.1 à 1.8) constituent au moins partiellement un organe fonctionnel dudit appareil (I), ladite peau souple (5) n'exerçant que la fonction de liaison lâche desdits éléments rigides (1.1 à 1.8) entre eux et avec ladite base (2).

6. Structure selon l'une des revendications 1 à 4,
**caractérisée en ce que** ladite peau souple (17), en plus de sa fonction de liaison lâche desdits éléments rigides (1.1 à 1.8) entre eux et avec ladite base (2), constitue au moins partiellement un organe fonctionnel dudit appareil (II), lesdits éléments rigides (1.1 à 1.8) ne servant que de support au moins partiel à ladite peau souple (17).

7. Structure selon l'une des revendications 1 à 6,
**caractérisée en ce que** lesdits éléments rigides (1.1 à 1.8) sont répartis autour de ladite base (2) et **en ce que** lesdits moyens de traction (11) sont communs aux liens souples (12) de tous lesdits éléments rigides (1.1 à 1.8).

8. Structure selon la revendication 7,
**caractérisée en ce que** ladite peau souple (5, 17) présente, à l'état détendu desdits liens souples (12), la forme au moins approximative d'une soucoupe.

9. Structure selon l'une des revendications 7 ou 8,
**caractérisée en ce que** lesdits éléments rigides (1.1 à 1.8) présentent au moins approximativement la forme de secteurs, convergeant vers ladite base (2).

10. Structure selon l'une des revendications 1 à 9,
**caractérisée en ce que** chaque élément rigide (1.1 à 1.8) est relié à ladite base (2) par au moins deux liens souples (12), chaque lien souple (12) étant commun à au moins deux éléments rigides adjacents (1.1 à 1.8).

## Patentansprüche

1. Verstellbare Struktur für einen Apparat (I, II), der zum Einbau an Bord eines Raumfahrzeugs bestimmt ist, wobei die besagte Struktur ausgestattet ist mit:
- einer Basis (2),
- Zugelementen (11), die auf der Basis (2) angebracht sind, und
- elastischen Bändern (12), die mit den Zugelementen (11) verbunden sind,
so dass der Apparat durch Wirkung der Zugelemente (11) auf die elastischen Bänder (12) von einem entspannten Ruhezustand in einen Funktionszustand unter Spannung übergehen kann,
**dadurch gekennzeichnet, dass** sie mit mehreren starren Elementen (1.1 bis 1.8) versehen ist, die in lockerer Form untereinander und mit der Basis (2) mittels einer elastischen Haut (5, 17) verbunden sind, sowie **dadurch**, dass die elastischen Bänder (12) mit den starren Elementen (1.1 bis 1.8) so verbunden sind, dass die starren Elemente (1.1 bis 1.8) im Funktionszustand unter Spannung bis zum Anschlag an die Basis (2) gehen und sich untereinander berühren.

2. Struktur gemäß Anspruch 1,
**dadurch gekennzeichnet, dass** die Zugelemente (11) mindestens eine komprimierte Feder aufweisen.

3. Struktur gemäß Anspruch 1,
**dadurch gekennzeichnet, dass** die Zugelemente (11) mindestens eine aufblasbare Blase aufweisen.

4. Struktur gemäß einem der Ansprüche 1 bis 3,
**dadurch gekennzeichnet, dass** die Basis (2) und die starren Elemente (1.1 bis 1.8) mit entsprechenden Oberflächen (15, 16) ausgestattet sind, die geeignet sind, untereinander zusammenzuwirken, um den starren Elementen (1.1 bis 1.8) bei Wirkung der besagten Zugelemente (11) auf die Bänder (12) eine stabile Lage auf der Basis (2) zu verschaffen.

5. Struktur gemäß einem der Ansprüche 1 bis 4,
**dadurch gekennzeichnet, dass** die starren Elemente (1.1 bis 1.8) mindestens teilweise ein Funktionsorgan des Apparats (I) bilden, wobei die elastische Haut (5) nur die Funktion einer lockeren Verbindung der starren Elemente (1.1 bis 1.8) untereinander und mit der Basis (2) ausübt.

6. Struktur gemäß einem der Ansprüche 1 bis 4,
**dadurch gekennzeichnet, dass** die elastische Haut (17) neben ihrer Funktion einer lockeren Verbindung der starren Elemente (1.1 bis 1.8) untereinander sowie mit der Basis (2) mindestens teilweise ein Funktionsorgan des Apparates (II) darstellt, wobei die starren Elemente (1.1 bis 1.8) nur als zumindest teilweise Stütze für die elastische Haut (17) dienen.

7. Struktur gemäß einem der Ansprüche 1 bis 6,
**dadurch gekennzeichnet, dass** die starren Elemente (1.1 bis 1.8) rings um die Basis (2) verteilt sind und **dadurch**, dass die Zugelemente (11) mit den elastischen Bändern (12) aller starren Elemente (1.1 bis 1.8) verbunden sind.

8. Struktur gemäß Anspruch 7,
**dadurch gekennzeichnet, dass** die elastische Haut (5, 17) im entspannten Zustand der elastischen Bänder (12) zumindest annähernd die Form einer Untertasse darstellt.

9. Struktur gemäß einem der Ansprüche 7 oder 8,
**dadurch gekennzeichnet, dass** die starren Elemente (1.1 bis 1.8) zumindest annähernd die Form von Sektoren darstellen, die zur Basis (2) hin zusammenlaufen.

10. Struktur gemäß einem der Ansprüche 1 bis 9,
**dadurch gekennzeichnet, dass** jedes starre Element (1.1 bis 1.8) mit der Basis (2) durch mindestens zwei elastische Bänder (12) verknüpft ist, wobei jedes elastische Band (12) mit mindestens zwei nebeneinander liegenden starren Elementen (1.1 bis 1.8) verbunden ist.

## Claims

1. A variable geometry structure for an apparatus (I, II) intended to be mounted on board a spacecraft, the said structure comprising:
- a base (2),
- traction means (11) mounted on the said base (2), and
- flexible links (12) connected to the said traction means (11),
the said apparatus being able to change from a relaxed non-functional state to a tensed functional state by the action of the said traction means (11) on the said flexible links (12), wherein it comprises several rigid elements (1.1 to 1.8) connected loosely to each other and to the said base (2) by the intermediary of a flexible skin (5, 17) and wherein the said flexible links (12) are connected to the said rigid elements (1.1 to 1.8) in such a way that, in the said tensed functional state, the said rigid elements (1.1 to 1.8) are butted against the said base (2) and in contact with each other.

2. The structure as claimed in claim 1, wherein the said traction means (11) comprise at least one compressed spring.

3. The structure as claimed in claim 1, wherein the said traction means (11) comprise at least one inflatable bladder.

4. The structure as claimed in any one claims 1 to 3, wherein the said base (2) and the said rigid elements (1.1 to 1.8) comprise respective surfaces (15, 16) suitable for cooperating with each other in order to provide a stable seating for the said rigid elements (1.1 to 1.8) on the said base (2), under the action of the said traction means (11) on the said links (12).

5. The structure as claimed in any one claims 1 to 4, wherein the said rigid elements (1.1 to 1.8) constitute, at least partially, a functional device of the said apparatus (I), the said flexible skin (5) carrying out only the function of loosely connecting the said rigid elements (1.1 to 1.8) to each other and with the said base (2).

6. The structure as claimed in any one claims 1 to 4, wherein the said flexible skin (17), in addition to its function of loose connection of the said rigid elements (1.1 to 1.8) to each other and with the said base (2), constitutes, at least partially, a functional device of the said apparatus (II), the said rigid elements (1.1 to 1.8) serving only as a support, at least partially, for the said flexible skin (17).

7. The structure as claimed in any one claims 1 to 6, wherein the said rigid elements (1.1 to 1.8) are distributed around the said base (2) and the said traction means (11) are common to the flexible links (12) of all of the said rigid elements (1.1 to 1.8).

8. The structure as claimed in claim 7, wherein the said flexible skin (5, 17) exhibits, in the relaxed state of the said flexible links (12), at least approximately the shape of a saucer.

9. The structure as claimed in any one claims 7 or 8, wherein the said rigid elements (1.1 to 1.8) exhibit, at least approximately, the shape of sectors converging towards the said base (2).

10. The structure as claimed in any one claims 1 to 9, wherein each rigid element (1.1 to 1.8) is connected to the said base (2) by at least two flexible links (12), each flexible link (12) being common to at least two adjacent rigid elements (1.1 to 1.8).
